# EUROPEAN PATENT APPLICATION

(11) **EP 4 470 662 A1**
(43) Date of publication of application: **04.12.2024**
(21) Application number: 23746850.9
(22) Date of filing: 20.01.2023
(51) Int. Cl.: B01F 27/15, B01F 27/072, B01F 27/96, B01J 19/18, B05B 3/02

(54) **LIQUID DISPERSING DEVICE AND LIQUID DISPERSING APPARATUS USING SAME**

(30) Priority: 25.01.2022 JP 2022009299; 04.02.2022 JP 2022016680
(71) Applicant: Kansai Chemical Engineering Co., Ltd., Amagasaki-shi, Hyogo 660-0053 (JP); Bio-energy Corporation, Amagasaki-shi, Hyogo 660-0053 (JP)
(72) Inventor: NODA, Hideo, Amagasaki-shi, Hyogo 660-0053 (JP); HAMA, Shinji, Amagasaki-shi, Hyogo 660-0053 (JP)
(74) Representative: Schlich
(86) International application number: PCT/JP2023/001671
(87) International publication number: WO 2023/145637

(57) **Abstract**

A liquid dispersion device of the present invention includes at least one liquid flow member attachable to a rotary shaft. The liquid flow member includes at least one tubular suction portion extending along the rotary shaft and including a suction port at a lower end thereof, and at least one ejection portion extending in a direction inclined with respect to the suction portion and having one end that is in communication with an upper end of the suction portion and the other end that includes an ejection port. An angle θ₂ between a horizontal direction and an axial direction of the ejection portion at an opening surface of the ejection port is -90°≤θ₂≤20° with respect to the horizontal direction.

## Description

### Technical Field

The present invention relates to a liquid dispersion device and a liquid dispersion apparatus using the liquid dispersion device.

### Background Art

In recent years, oils and fats have been gaining attention as raw materials to be converted into fuels and chemicals. In particular, active attempts are being made to synthesize long-chain fatty acid esters from animal oils and fats and/or vegetable oils and fats through chemical reactions and utilize the synthesized long-chain fatty acid esters as biodiesel fuel that is interchangeable with light oil.

On the other hand, for reaction systems with two or more liquid phases in which phase transfer catalysts or slurry catalysts are used, technologies for synthesizing various compounds through reactions such as asymmetric synthesis reactions have been gaining attention. Many of these reactions are accelerated through vigorous agitation of the reaction system.

Two-liquid-phase reactions may be employed, for example, in production of biodiesel fuel. An example thereof is an enzyme-catalyzed transesterification reaction in which an enzyme such as lipase is used as a catalyst. A liquid enzyme or an enzyme (immobilized enzyme) immobilized on a carrier such as an ion-exchange resin is used as the enzyme for such an enzyme-contact transesterification reaction. Because a culture solution is concentrated and refined and is then used as the liquid enzyme, the liquid enzyme is less expensive than the immobilized enzyme. The enzyme remains in an aqueous solution of glycerin, which is produced as a byproduct in the aforementioned transesterification reaction, and thus this solution can be used for a reaction in a following batch. This makes it possible to reuse the liquid enzyme repeatedly and reduce the cost for the production of biodiesel fuel (Non-Patent Document 1).

In a transesterification reaction in which a liquid enzyme is used, a two-phase system that includes an oil layer and a water layer is used, and an emulsion is formed through, for example, high-speed agitation of reactants. Here, a considerable amount of energy load needs to be applied to the agitator during the high-speed agitation of the reactants. Meanwhile, to increase the industrial productivity, there has been a desire to reduce the amount of energy required for an operation such as agitation of reactants. However, this leads to a contradiction where the ability to form emulsions using the reactants decreases and the transesterification reaction cannot be effectively performed.

Alternatively, a method in which an alkaline catalyst is used instead of the above-mentioned enzyme may also be employed. In this case as well, a reaction system with two liquid phases is adopted, and vigorous agitation is required for the reaction.

### Related Art Documents

### Non-Patent Documents

Non-Patent Document 1: M. Nordblad et al., Biotechnology and Bioengineering, 2014, Vol. 11, No. 12, pp.2446-2453

### Summary of Invention

### Problem to be Solved by the Invention

The present invention is to solve the above-mentioned problems, and it is an object thereof to provide a liquid dispersion device that can reduce energy required for various operations such as distillation, mixing, and agitation of a treatment liquid, and a liquid dispersion apparatus using the liquid dispersion device.

### Means for Solving the Problem

The present invention provides a liquid dispersion device comprising
at least one liquid flow member attachable to a rotary shaft,
wherein the liquid flow member includes:
   at least one tubular suction portion extending along the rotary shaft and including a suction port at a lower end thereof and
   at least one tubular ejection portion extending in a direction inclined with respect to the suction portion and having one end that is in communication with an upper end of the suction portion and the other end that includes an ejection port, and
an angle θ₂ formed between a horizontal direction and an axial direction of the ejection portion at an opening surface of the ejection port satisfies a relationship -90°≤θ₂≤20° with respect to the horizontal direction.

In one embodiment, the suction portion of the liquid flow member extends in parallel with the rotary shaft.

In one embodiment, the suction portion of the liquid flow member is a straight tube extending substantially in parallel with an axial direction of the rotary shaft.

In one embodiment, the liquid dispersion device of the present invention includes a plurality of the suction portions, wherein the lower ends of all of the suction portions are located at the same height with respect to the rotary shaft.

In one embodiment, the liquid dispersion device of the present invention includes a plurality of the suction portions, wherein the lower end of one of the suction portions and the lower end of another suction portion of the suction portions are located at different heights with respect to the rotary shaft.

The present invention also provides a liquid dispersion apparatus comprising:
a treatment chamber for containing a treatment liquid;
the liquid dispersion device provided in the treatment chamber; and
a rotary shaft to which the liquid dispersion device is attached.

The present invention also provides a method of circulating a treatment liquid, comprising:
rotating the liquid dispersion device to draw the treatment liquid into the liquid dispersion device and eject the treatment liquid from the liquid dispersion device,
wherein the step in which the treatment liquid is drawn into the liquid dispersion device and ejected from the liquid dispersion device is performed in a state in which insides of tubular portions of both the suction portion and the ejection portion of the liquid dispersion device are filled the treatment liquid.

### Effects of the Invention

With the liquid dispersion device of the present invention, when the scooped reaction liquid is moved to a position above the liquid surface and is then dispersed, the liquid flow member is filled with the reaction liquid, thus making it possible to efficiently stir the reaction liquid while reducing power applied to the rotary shaft. This makes it possible to facilitate, with little power, the movement and circulation in the vertical direction of the liquid contained in the container in addition to agitation thereof due to the rotation in the horizontal direction. The liquid dispersion device of the present invention can be incorporated in a liquid dispersion apparatus as a component thereof, thus making it possible to reduce energy required for physical operations such as distillation, mixing, and agitation of the treatment liquid. For example, when a reaction liquid constituted by a single phase or multiple phases (e.g., two phases constituted by an oil phase and a water phase) is contained as the treatment liquid in the liquid dispersion apparatus of the present invention, it is possible to facilitate emulsification of the reaction liquid and/or extraction of a byproduct (e.g., glycerin) with water without the use of extra power.

### Brief Description of Drawings

FIG. 1 is a schematic diagram showing an example of a liquid dispersion device of the present invention.
FIG. 2 is a cross-sectional view showing an example of a liquid flow member of the liquid dispersion device shown in FIG. 1.
FIG. 3 shows cross-sectional views of the liquid flow member included in the liquid dispersion device of the present invention for illustrating the features of the liquid flow member. FIG. 3(a) is a cross-sectional view showing an example of the liquid flow member that includes two bent portions, and FIG. 3(b) is a cross-sectional view showing an example of the liquid flow member that includes one bent portion and a curved ejection portion.
FIG. 4 is a schematic diagram showing another example of the liquid dispersion device of the present invention.
FIG. 5 is a schematic diagram showing another example of the liquid dispersion device of the present invention.
FIG. 6 is a schematic diagram showing an example of a liquid dispersion apparatus (reaction apparatus) in which the liquid dispersion device shown in FIG. 1 is incorporated.
FIG. 7 is a schematic diagram showing another example of the liquid dispersion apparatus (reaction apparatus) in which the liquid dispersion device shown in FIG. 1 is incorporated.
FIG. 8 is a schematic diagram showing another example of the liquid dispersion apparatus (reaction apparatus) in which the liquid dispersion device shown in FIG. 1 is incorporated.
FIG. 9 is a schematic diagram showing an example of the liquid dispersion apparatus (reaction apparatus) in which the liquid dispersion device shown in FIG. 4 is incorporated.
FIG. 10 is a schematic diagram showing an example of the liquid dispersion apparatus (reaction apparatus) in which the liquid dispersion device shown in FIG. 5 is incorporated.

### Description of Embodiments

The present invention will be described with reference to the attached drawings. Note that, in all of the diagrams described below, a configuration denoted by a certain reference numeral is identical to those denoted by the identical reference numeral in the other diagrams.

### Liquid Dispersion Device

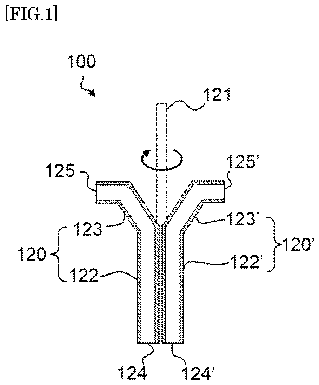

FIG. 1 is a schematic diagram showing an example of a liquid dispersion device of the present invention.

A liquid dispersion device 100 shown in FIG. 1 includes two tubular liquid flow members 120 and 120' that can be attached to a rotary shaft 121. The rotary shaft 121 shown in FIG. 1 extends in the vertical direction. Although two liquid flow members are shown in FIG. 1, the present invention is not limited to this configuration, and it is sufficient that the liquid dispersion device includes at least one tubular liquid flow member.

The liquid flow members 120 and 120' are respectively constituted by tubular suction portions 122 and 122' and tubular ejection portions 123 and 123' that are respectively in communication with upper ends of the suction portions 122 and 122' at one end and include ejection ports 125 and 125' at the other end.

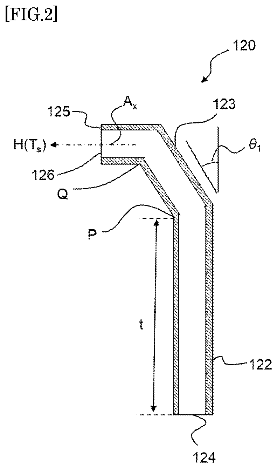

FIG. 2 is a cross-sectional view of the liquid flow member 120 shown in FIG. 1 taken in a longitudinal direction. The liquid dispersion member 120' shown in FIG. 1 is similar to the liquid flow member 120 and is thus omitted.

The suction portion 122 of the liquid dispersion member 120 includes a suction port 124 that is open at the lower end of the suction portion 122. The suction portion 122 shown in FIG. 2 is constituted by a tube of which both the outer circumferential surface and the inner circumferential surface extend substantially straight from the upper end toward the suction port 124 provided at the lower end.

There is no particular limitation on the cross-sectional shape of the suction portion 122 as long as the suction portion 122 has a tubular shape. For example, the cross-sectional shape of the suction portion 122 may be a circular shape, an elliptical shape, a triangular shape, a rectangular shape, or any other polygonal shape. The liquid dispersion device of the present invention may include a plurality of suction portions that have different cross-sectional shapes. In order to reduce resistance at the time when the suction portion 122 moves in a treatment liquid, which will be described later, the suction portion 122 of the present invention preferably has a circular or elliptical cross-sectional shape. Alternatively, the liquid dispersion device may include a suction portion constituted by a tube disposed in such a manner as to be twisted around the axis of the rotary shaft 121, instead of the suction portion shown in FIG. 2.

There is no particular limitation on the size of the suction portion 122, but when the suction portion 122 has, for example, a circular cross-sectional shape, the outer diameter of the suction portion 122 is, for example, 5 mm to 50 mm.

There is no particular limitation on the shape of the suction port 124. The shape of the suction port 124 may be the same as or different from the cross-sectional shape of the suction portion 122 described above. For example, the shape of the suction port 124 may be a circular shape, an elliptical shape, a triangular shape, a rectangular shape, or any other polygonal shape. Note that the suction port 124 may be formed by cutting the suction portion 122 diagonally with respect to its axis to enlarge the opening area and increase the amount of treatment liquid that can be introduced into the suction portion 122.

The straight structure (length) of the suction portion 122 is substantially parallel to the rotary shaft 121 shown in FIG. 1 and designed according to the depth of a treatment liquid 116 that is contained in a treatment chamber 110 of a liquid dispersion apparatus, which will be described later. There is no particular limitation on a distance t from the lower end (the suction port 124) of the suction portion 122 constituting the straight structure to the lowest part of a joint between the suction portion 122 and the ejection portion 123 (a bent portion P in the liquid dispersion member 120). The distance t can be adjusted as appropriate by a person skilled in the art according to, for example, the capacity of the treatment chamber 110 that is used.

The ejection portion 123 is in communication with the upper end of the suction portion 122 at one end, and inclined with respect to the suction portion 122 at the bent portion P. The other end of the ejection portion 123 includes the ejection port 125 for discharging the treatment liquid that has passed through the ejection portion 123 to the outside. The ejection portion 123 shown in FIG. 2 has a tubular shape.

In the present invention, an inclination angle θ₁ of the ejection portion 123 with respect to the axial direction of the suction portion 122 can be suitably set by a person skilled in the art, but is, for example, 10° to 89°, and preferably 15° to 45°. If the inclination angle θ₁ is smaller than 10°, the liquid dispersion member 120 needs to be rotated at a higher speed in order to cause the treatment liquid sucked through the suction portion 122 to pass through the ejection portion 123 and be discharged from the ejection port 125. If the inclination angle θ₁ exceeds 89°, the ejection portion 123 may be located under the surface of the treatment liquid, and the liquid dispersion device may not be able to appropriately exhibit its liquid dispersion function. Note that an inclination angle of the ejection portion 123' shown in FIG. 1 corresponding to the ejection portion 123 may be the same as or different from the inclination angle θ₁ of the ejection portion 123.

There is no particular limitation on the shape of the ejection port 125 of the ejection portion 123. The shape of the ejection port 125 may be the same as or different from the cross-sectional shape of the suction portion 122 described above. For example, the shape of the ejection port 125 may be a circular shape, an elliptical shape, a triangular shape, a rectangular shape, or any other polygonal shape. Note that, in the present invention, the inner diameter of the ejection portion 123 may be constant or decrease gradually or stepwise from the side that is in communication with the suction portion 122 toward the ejection port 125.

There is no particular limitation on the length of the ejection portion 123 (e.g., the shortest distance from the bent portion P of the liquid dispersion member 120 to the ejection port 125), and the length can be set suitably by a person skilled in the art.

In the liquid flow member 120 shown in FIG. 2, the ejection portion 123 is bent at a bent portion Q, and the ejection port 125 is oriented outward in a direction of the radius of rotation of the liquid flow member 120.

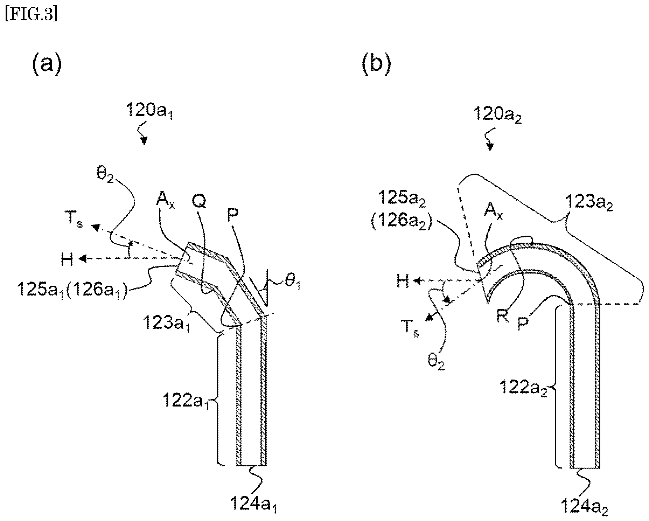

In the embodiment shown in FIG. 2, the ejection port 125 is oriented such that an axial direction Tₛ of the ejection portion 123 at an opening surface 126 of the ejection port 125 is substantially the same as a horizontal direction H, that is, the ejection port 125 is oriented at an angle of substantially 0° with respect to the horizontal direction H, but the present invention is not necessarily limited to this angle. The ejection portion 123 is designed such that the axial direction Tₛ of the ejection portion 123 at the opening surface 126 of the ejection port 125 extends at a predetermined angle with respect to the horizontal direction H (this will be described in more detail with reference to FIG. 3, which will be described later).

Referring again to FIG. 1, the ends of the suction portions 122 and 122' at which the suction ports 124 and 124' are provided are aligned substantially along a straight line in the horizontal direction. With this configuration, the liquid dispersion members 120 and 120' of the liquid dispersion device 100 can suck the stored treatment liquid through the suction ports 124 and 124' at substantially the same depth.

In the liquid dispersion device 100 of the present invention, the liquid dispersion members 120 and 120' are fixed to, for example, the rotary shaft 121 (e.g., around the axis of the rotary shaft 121). Note that the liquid dispersion members 120 and 120' are preferably disposed compactly so as to be as close as possible to the rotary shaft 121. When the entire liquid dispersion members 120 and 120' are disposed compactly, the areas of the horizontal cross sections of the liquid dispersion members 120 and 120' relative to the rotary shaft 121 decrease. Consequently, it is possible to reduce resistance in the treatment liquid as far as possible when the liquid dispersion members 120 and 120' are rotated via the rotary shaft 121.

FIG. 3 is a cross-sectional view showing a liquid flow member of the liquid dispersion device of the present invention for illustrating the features of the liquid flow member.

Liquid flow members 120a₁ and 120a₂ shown in FIGS. 3(a) and 3(b) respectively include bent portions P between suction ports 124a₁ and 124a₂ and ejection ports 125a₁ and 125a₂, and are respectively constituted by suction portions 122a₁ and 122a₂ (i.e., tubular portions extending from the suction ports 124a₁ and 124a₂ to the bent portions P) and ejection portions 123a₁ and 123a₂ (i.e., tubular portions extending from the bent portions P to the ejection ports 125a₁ and 125a₂) that are continuous with each other with the bent portions P as boundaries therebetween.

The ejection portion 123a₁ shown in FIG. 3(a) is provided, in its intermediate portion, with another bent portion Q, whereas the ejection portion 123a₂ shown in FIG. 3(b) is not provided with another bent portion as described above and is constituted by a curved tubular portion that extends upward from the bent portion P to an apex R while being curved as well as extends downward from the apex R to the ejection port 125a₂ while being curved.

Here, in both the ejection portion 123a₁ shown in FIG. 3(a) and the ejection portion 123a₂ shown in FIG. 3(b), directions Tₛ in which axes Aₓ of the ejection portions 123a₁ and 123a₂ at opening surfaces 126a₁ and 126a₂ of the ejection ports 125a₁ and 125a₂ are oriented (Tₛ is also referred to "the axial direction of the ejection portion at the opening surface of the ejection port") form any desired angle θ₂ with the horizontal direction H.

The angle θ₂ is defined as follows in this specification.

For example, when the axial direction Tₛ of the ejection portion at the opening surface of the ejection port is oriented in the horizontal direction (i.e., the opening surface is orthogonal to the horizontal plane), the axial direction Tₛ of the ejection portion at the opening surface of the ejection port and the horizontal direction H are oriented in the same direction, and the angle θ₂ can be represented as 0° (e.g., in the case of the above-mentioned liquid flow member 120 shown in FIG. 2).

Alternatively, for example, when the axial direction Tₛ of the ejection portion 123a₁ at the opening surface 126a₁ of the ejection port 125a₁ forms a predetermined angle (θ₂) with the horizontal direction H and is located above the horizontal direction H as illustrated in FIG. 3(a), the angle θ₂ can be represented as a plus value (positive value).

On the other hand, for example, when the axial direction Tₛ of the ejection portion 123a₂ at the opening surface 126a₂ of the ejection port 125a₂ forms a predetermined angle (θ₂) with the horizontal direction H and is located below the horizontal direction H as illustrated in FIG. 3(b), the angle θ₂ can be represented as a minus value (negative value).

When the liquid flow member of the liquid dispersion device of the present invention includes, for example, the curved ejection portion 123a₂ shown in FIG. 3(b), a direction in which the axis (central axis) of the ejection portion 123a₂ is oriented varies depending on any axial cross sections of the ejection portion 123a₂. On the contrary, in the present invention, attention is focused on the axial direction Tₛ of the ejection portion at "the opening surface of the ejection port".

The present invention is designed such that the angle θ₂ formed between the horizontal direction H and the axial directions Tₛ of the ejection portions 123a₁ and 123a₂ at the opening surfaces 126a₁ and 126a₂ of the ejection ports 125a₁ and 125a₂ of the ejection portions 123a₁ and 123a₂ satisfies the relationship -90°≤θ₂≤20°, preferably -90°<θ₂≤20°, more preferably -90°<θ₂≤15°, and even more preferably -85°≤θ₂≤10°, with respect to the horizontal direction H. Due to the angle θ₂ satisfying such a relationship, the liquid dispersion device of the present invention can cause the "siphon-like" movement of the treatment liquid as described later when incorporated as a constitutional component of a treatment apparatus (even when the liquid flow member has any of the structures shown in FIGS. 2, 3(a), and 3(b)).

Furthermore, in the present invention, the angle θ₂ above more preferably satisfies the relationship 0°≤θ₂≤20°, and even more preferably 0°≤θ₂≤10°, with respect to the horizontal direction H. For example, when a treatment liquid containing a reactive component, such as a two-phase system reaction liquid constituted by an oil phase and a water phase, is used in the liquid dispersion device of the present invention, the reactivity of the treatment liquid ejected from the ejection ports 125a₁ and 125a₂ tends to improve when the treatment liquid is allowed to collide against a hard member such as an inner wall of a treatment apparatus, which will be described later, rather than the liquid surface. Here, due to the angle θ₂ being a positive value as mentioned above, the treatment liquid ejected from the ejection ports 125a₁ and 125a₂ is more likely to collide against the inner wall rather than the liquid surface inside the treatment apparatus, thus making it possible to consequently improve the reactivity of the treatment liquid.

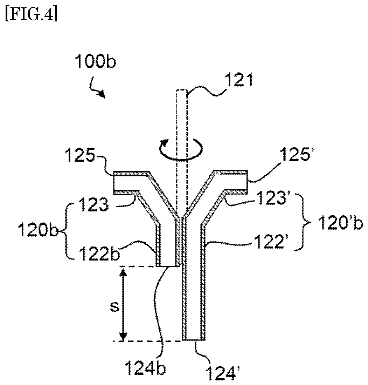

FIG. 4 is a schematic diagram showing another example of the liquid dispersion device of the present invention.

A liquid dispersion device 100b shown in FIG. 4 includes liquid dispersion members 120b and 120'b that have different shapes. An ejection portion 123 of the liquid dispersion member 120b and an ejection portion 123' of the liquid dispersion member 120'b shown in FIG. 4 are the same as those shown in FIG. 1.

On the other hand, the liquid dispersion member 120b shown in FIG. 4 includes a suction portion 122b that is shorter than a suction portion 122' of the liquid dispersion member 120'b, and therefore, there is a difference corresponding to a length S between a suction port 124b of the suction portion 122b and a suction port 124' of the suction portion 122' in the vertical direction. The length S varies according to the type and amount of treatment liquid used, the size of the treatment chamber of the liquid dispersion apparatus, which will be described later, etc., and is not necessarily limited, but is, for example, 10 mm to 2000 mm, and preferably 20 mm to 1000 mm. Due to a difference corresponding to such a length between the suction port 124b of the suction portion 122b and the suction port 124' of the suction portion 122' in the vertical direction, it is possible to suck treatment liquids of different types or compositions via the suction port 124b of the suction portion 122b and the suction port 124' of the suction portion 122'. On the other hand, the ejection ports 125 and 125' of the liquid dispersion members 120b and 120'b shown in FIG. 4 are disposed at substantially the same height in the vertical direction.

For example, when a two-phase system reaction liquid constituted by an oil phase and a water phase is used as the treatment liquid, adjusting the amount of oil phase and water phase used allows a portion of the treatment liquid that is constituted by components of the oil phase or components including the components of the oil phase in a larger amount to be preferentially sucked through the suction port 124b of the suction portion 122b, which is located higher than the suction port 124'. On the other hand, a portion of the treatment liquid that is constituted by components of the water phase or components including the components of the water phase in a larger amount can be preferentially sucked through the suction port 124' of the suction portion 122'b, which is located lower than the suction port 124b. Thus, it is possible to suck treatment liquids of different compositions via the suction ports 124b and 124', and discharge the sucked treatment liquids from the ejection ports 125 and 125' by rotating the rotary shaft 121. The ejection ports 125 and 125' are disposed at substantially the same height in the vertical direction as described above, and therefore, the sucked components of the oil phase and the sucked components of the water phase can be mixed and/or agitated in a more complex manner.

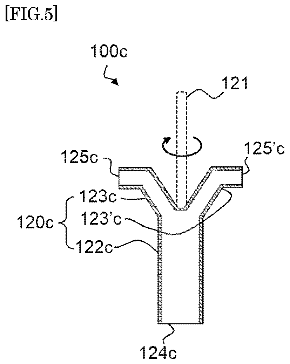

FIG. 5 is a schematic diagram showing another example of the liquid dispersion device of the present invention.

A liquid dispersion device 100c shown in FIG. 5 is constituted by one liquid dispersion member 120c.

The liquid dispersion member 120c shown in FIG. 5 includes a suction portion 122c extending straight in the axial direction of the rotary shaft 121 and two ejection portions 123c and 123'c extending from an upper end of the suction portion 122c so as to be inclined with respect to the suction portion 122c. The inclination angles of the ejection portions 123c and 123'c with respect to the axial direction of the rotary shaft 121 may be the same as or different from each other.

The suction portion includes, at a lower end, one suction port 124c, and there is no particular limitation on the shape of the suction port 124c. For example, the shape of the suction port 124c may be a circular shape, an elliptical shape, a triangular shape, a rectangular shape, or any other polygonal shape. Note that, in the present invention, the inner diameter of the suction portion 122c may be constant or decrease or increase gradually or stepwise from the lower end toward the upper end. Although the inner diameter of the suction portion 122c shown in FIG. 5 is larger than inner diameters of the ejection portions 123c and 123'c, there is no particular limitation to this size. The inner diameter of the suction portion 122c may be smaller than the inner diameters of the ejection portions 123c and 123'c or the inner diameters of the suction portion 122c and the ejection portions 123c and 123'c may be substantially the same.

In the embodiment shown in FIG. 5, the single suction portion 122c rotates as the rotary shaft 121 is rotated, and therefore, it is possible to suppress generation of turbulence in the treatment liquid around the rotating suction portion 122c, when compared with, for example, the case where the suction portions 122 and 122' shown in FIG. 1 are rotated. Consequently, the treatment liquid is sucked through the suction portion 124c while being agitated relatively gently, and ejected from the ejection ports 125c and 125'c of the ejection portions 123c and 123'c. Therefore, it is possible to gently mix and/or agitate the sucked treatment liquid.

The liquid dispersion members described above and fixing tools that are included in the liquid dispersion device of the present invention are made of materials that have sufficient strength and appropriate durability against the treatment liquid. Materials that can be used for the liquid dispersion members and the fixing tools are not necessarily limited, but examples thereof include metals such as iron, stainless steel, hastelloy, and titanium, and combinations thereof. These members may be provided with a coating known in the art, such as Teflon (registered trademark), glass lining, or rubber lining, in order to enhance chemical resistance.

### Liquid Dispersion Apparatus

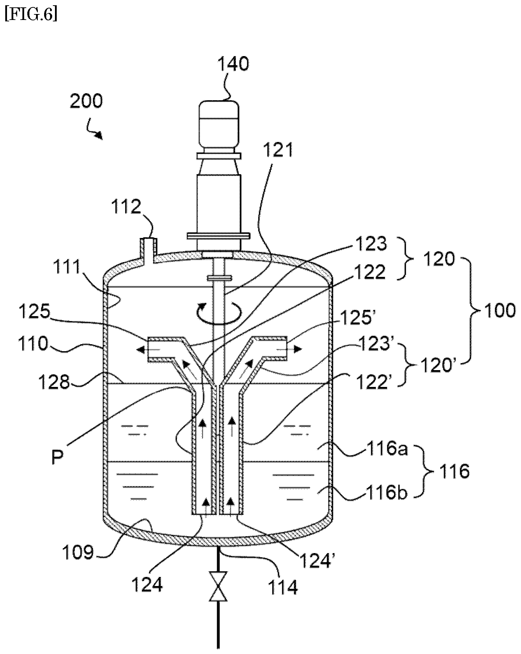

FIG. 6 is a schematic diagram showing an example of a liquid dispersion apparatus in which the liquid dispersion device shown in FIG. 1 is incorporated. The following describes, with reference to FIG. 6, a case where a liquid dispersion apparatus 200 is used as a reaction apparatus in which a two-phase system reaction liquid constituted by an oil phase 116a and a water phase 116b is used as the treatment liquid 116.

The liquid dispersion apparatus 200 of the present invention includes a treatment chamber 110 for containing a treatment liquid, the liquid dispersion device 100 shown in FIG. 1, which is disposed in the treatment chamber 110, and the rotary shaft 121 to which the liquid dispersion device 100 is attached.

The treatment chamber 110 is a sealable chamber in which the treatment liquid 116 can be contained and agitated, and has a bottom 109 that is a flat bottom, a round bottom, a conical bottom, or a downward sloping bottom, for example.

The size (capacity) of the treatment chamber 110 is not necessarily limited, because it is set as appropriate according to the application of the liquid dispersion apparatus 200 (e.g., the type of operation to be performed using the liquid dispersion apparatus, such as a reaction or distillation), the amount of treatment liquid to be processed, and the like, but the size is, for example, from 0.1 liters to 1,000,000 liters.

In an embodiment, the treatment chamber 110 also includes a treatment liquid inlet 112 and an outlet 114 for a product etc. The treatment liquid inlet 112 is an inlet through which the treatment liquid 116 is newly supplied into the treatment chamber 110. The treatment liquid inlet 112 is provided, for example, on the top (e.g., on a top lid) of the treatment chamber 110. Alternatively, the treatment liquid inlet 112 may be provided in a side surface of the treatment chamber 110. The number of treatment liquid inlets 112 provided on the treatment chamber 110 is not limited to one. For example, a plurality of treatment liquid inlets may be provided on the treatment chamber 110.

The outlet 114 for a product etc. is an outlet through which a product or concentrate (in the present specification, these will be collectively referred to as "a product or the like") obtained in the treatment chamber 110 is to be taken out of the treatment chamber 110. Reaction residues, effluent, and the like in addition to the product or the like are capable of being discharged through the outlet 114 for a product etc., and the discharge can be regulated by, for example, opening and closing a valve 115 provided downstream of the outlet 114 for a product etc. The outlet 114 for a product etc. is in communication with, for example, the center of the bottom 109 in the treatment chamber 110.

The top of the treatment chamber 110 may be provided with, for example, an openable structure such as a lid or a maintenance hole. The top of the treatment chamber 110 may be further provided with a pressure adjustment port (not shown) for adjusting the pressure in the treatment chamber 110. Furthermore, the pressure adjustment port may be connected to, for example, a pressure reducing pump (not shown).

The treatment liquid 116 contained in the treatment chamber 110 is a liquid such as an aqueous solution or a slurry. In a case where the liquid dispersion apparatus 400 is used in, for example, the production of a fatty acid ester through a transesterification reaction, which will be described later, the treatment liquid 116 is constituted by, for example, a two-phase system composed of the oil phase 116a and the water phase 116b, and both the oil phase 116a and the water phase 116b contain reactants such as starting materials and media such as solvents. Note that the treatment liquid 116 contained in the treatment chamber 110 is not limited to the two-phase system composed of the oil phase 116a and the water phase 116b. The treatment liquid 116 may be constituted by a single liquid phase or a plurality of liquid phases (e.g., two phases or three layers).

The treatment chamber 110 is made of, for example, a material similar to the material of the liquid dispersion members described above. Surface treatment similar to that performed on the liquid dispersion members may also be performed as necessary.

The rotary shaft 121 is a shaft with predetermined rigidity, and has, for example, a cylindrical shape or a columnar shape. The rotary shaft 121 typically extends in the vertical direction inside the treatment chamber 110. The thickness of the rotary shaft 121 is not necessarily limited, but is, for example, 8 mm to 200 mm. The length of the rotary shaft 121 varies according to the size of the treatment chamber 110 used or the like, and an appropriate length may be selected by a person skilled in the art.

An end of the rotary shaft 121 is connected to a motor 140 or other rotating means at a position above the treatment chamber 110. For example, the other end of the rotary shaft 121 is not connected to the bottom 109 of the treatment chamber 110, and is disposed at a certain distance from the bottom 109 of the treatment chamber 110. This reduces an area in the rotary shaft 121 that comes into contact with the reaction liquid 116. Alternatively, the other end of the rotary shaft may be housed in a predetermined bearing provided at the bottom 109 of the treatment chamber.

The rotary shaft 121 is made of a material similar to the material of the liquid dispersion members described above. Surface treatment similar to that performed on the liquid dispersion members may also be performed as necessary.

In the embodiment shown in FIG. 6, the liquid dispersion device 100 is directly fixed to the rotary shaft 121 around its axis.

In the liquid dispersion apparatus 200 shown in FIG. 6, the treatment liquid 116 is sucked by (i.e., taken into) the liquid flow members 120 and 120' of the liquid dispersion device 100 through the suction ports 124 and 124' as a result of the rotary shaft 121 being rotated by the motor 140. The sucked treatment liquid moves through the paths in the suction portions 122 and 122' and the ejection portions 123 and 123' to the ejection ports 125 and 125' due to centrifugal force caused by the rotation of the rotary shaft 121, and is ejected from the ejection ports 125 and 125' into the treatment chamber 110, or more specifically, a space above a liquid surface 128 of the treatment liquid 116 in the treatment chamber 110. This allows the treatment liquid 116 to collide with an inner wall 111 of the treatment chamber 110 and the liquid surface 128 and to move upward from the bottom 109 of the treatment chamber 110, thereby facilitating stirring (e.g., agitation or circulation in the vertical direction) of the treatment liquid 116 in the height direction of the treatment chamber 110 and flowing down of the treatment liquid 116 after the collision with the inner wall 111. As a result, in a case where, for example, a predetermined reaction liquid is used as the treatment liquid, the production of a reaction product in the liquid dispersion apparatus 200 can be progressed more effectively.

In the liquid dispersion apparatus 200 according to of the present invention, it is preferable that a predetermined amount of the treatment liquid 116 is contained in the treatment chamber 110 in order to efficiently eject the treatment liquid 116 from the liquid dispersion device 100 by rotating the rotary shaft 121. Specifically, it is preferable that the treatment liquid 116 is contained in the treatment chamber 110 in such a manner that the liquid surface 128 of the treatment liquid 116 is located above the joints between the suction portions 122 and 122' and the ejection portions 123 and 123' of the liquid dispersion device 100, or more specifically, the treatment liquid 116 is present from the lower end (the suction port 124) of the suction portion 122 to a position above the lowest part of the joint between the suction portion 122 and the ejection portion 123 (i.e., the bent portion P in the liquid dispersion member 120) in both a case where the rotary shaft 121 is being rotated and a case where the rotary shaft 121 is not being rotated. When the liquid dispersion device 100 and the liquid surface 128 of the treatment liquid 116 satisfy this relationship, the treatment liquid 116 is present around lower end parts of the ejection portions 123 and 123' as well as around the suction portions 122 and 122'. When the liquid dispersion device 100 is rotated via the rotary shaft 121 in the state where this relationship is satisfied, the treatment liquid 116 forms a vortex as the liquid dispersion device 100 is rotated, and can rise to the ejection ports 125 and 125' through the inclined paths in the ejection portions 123 and 123' due to centrifugal force caused by the rotation of the liquid dispersion device 100. Finally, the treatment liquid 116 that has risen can be effectively ejected from the ejection ports 125 and 125' to the outside of the liquid dispersion members 120 and 120'.

Note that, in order to effectively eject the treatment liquid 116 from the ejection ports 125 and 125' to the outside of the liquid dispersion members 120 and 120' in the above-described case, it is preferable that the liquid surface (vortex surface) of the treatment liquid 116 is located above the bent portion P in the liquid dispersion member 120 even when the vortex is formed along with the rotation of the liquid dispersion device 100. It is sufficient that the relationship between the liquid surface (vortex surface) of the treatment liquid 116 and the bent portion P is maintained until the "siphon-like" movement of the treatment liquid 116 starts, and once the "siphon-like" movement of the treatment liquid starts, the relationship between the liquid surface (vortex surface) of the treatment liquid 116 and the bent portion P need not be necessarily satisfied.

Although an example has been described with reference to FIGS. 1 and 6 in which the two liquid dispersion members 120 and 120' of the liquid dispersion device 100 are disposed symmetrically with respect to the rotary shaft 121, there is no particular limitation to the number and arrangement of liquid dispersion members in the present invention. The liquid dispersion device of the present invention may include only one liquid dispersion member or a plurality of (e.g., two, three, four, five, six, seven, or eight) liquid dispersion members. In the case where a plurality of liquid dispersion members are used, it is preferable that the liquid dispersion members are held at substantially constant intervals (e.g., angles in the circumferential direction) around the rotary shaft 121 so that the rotary shaft can rotate smoothly.

In the embodiment shown in FIG. 6, the water phase 116b is located below the oil phase 116a, but the arrangement of the oil phase 116a and the water phase 116b in the liquid dispersion apparatus of the present invention is not limited to this example. For example, the arrangement of the oil phase and the water phase may be inverted in a system in which methanol is added to the water phase, and the oil phase may be located below the water phase. The liquid dispersion apparatus of the present invention can also be used for a two-phase system reaction liquid that includes an oil phase and a water tank arranged as described above.

As described above, the liquid dispersion device 100 can, for example, draw the treatment liquid 116 contained in a treatment chamber 110 as shown in FIG. 6 through the suction parts 124 and 124' of the liquid flow members 120 and 120' and allow the treatment liquid 116 to flow upward from the lower portion of the treatment chamber 110 through the suction portions 122 and 122' and the ejection portions 123 and 123', due to the rotation of the rotary shaft 121 and the centrifugal force caused by this rotation that is applied to the liquid flow members 120 and 120'. Then, the drawn reaction liquid is discharged from the ejection parts 125 and 125' of the ejection portions 123 and 123' at a position above the liquid surface 128.

Here, according to the general siphon principle, once a liquid is discharged from the exit (corresponding to the ejection part according to the present invention) provided at a lower position in a state in which a tube is filled with the liquid, a new liquid is sucked through an entrance (corresponding to the suction part according to the present invention) provided at a higher position, and the liquid keeps moving from the entrance to the exit until all the liquid present at the entrance moves and no liquid remains, or bubbles are generated in the tube and thus cavitation begins.

Meanwhile, in the present invention, in the case where the treatment liquid is moved from the suction parts 124 and 124' to the ejection parts 125 and 125' through the suction portions 122 and 122' and the ejection portions 123 and 123' in the liquid flowing members 120 and 120', once the suction portions 122 and 122' and the ejection portions 123 and 123' have been filled with the reaction liquid, the liquid dispersion members 120 and 120' enable continuous movement of the reaction liquid through the suction portions 122 and 122' and the ejection portions 123 and 123' that starts with suction of the treatment liquid through the suction parts 124 and 124' and ends with ejection of the treatment liquid from the ejection parts 125 and 125', as a tube used in the siphon principle, as long as the rotation of the rotary shaft 121 continues. In this specification, this continuous movement of the treatment liquid is referred to as "siphon-like" movement of the treatment liquid.

In the present invention, once this siphon-like movement of the treatment liquid starts, the volume of the treatment liquid that moves per unit time (e.g., mL/second) will increase compared with the volume (e.g., mL/second) before the start of the continuous movement when the rotary shaft 121 is rotated at the same speed, thus making it possible to efficiently stir a large amount of treatment liquid. As a result, it is possible to continuously circulate the treatment liquid 116 in the treatment chamber 110 with small power. Note that, once the siphon-like movement of the treatment liquid starts, it is possible to continue the movement of the treatment liquid due to hysteresis even if the rotational frequency of the rotary shaft 121 is reduced compared with that at the time of the start of the siphon-like movement. However, in this case, the amount of the ejected treatment liquid is larger than before the siphon-like movement of the treatment liquid starts, and therefore, the power required for the rotary shaft 121 naturally increases.

The liquid dispersion device 100 of the present invention enables the occurrence of the siphon-like movement of the treatment liquid through the suction parts 124 and 124', the suction portions 122 and 122', the ejection portions 123 and 123', and the ejection parts 125 and 125' of the liquid flow members 120 and 120'. As a result, once the siphon-like movement of the treatment liquid starts, the suction of the reaction liquid through the suction parts 124 and 124' and the ejection of the treatment liquid from the ejection parts 125 and 125' can be substantially continuously performed.

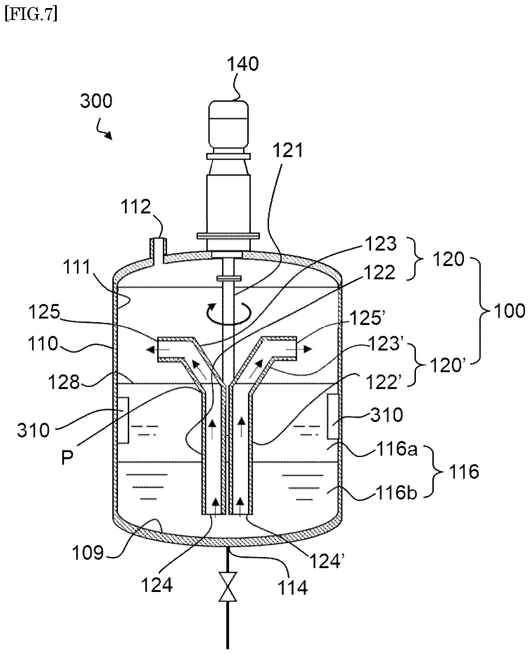

FIG. 7 is a schematic diagram showing another example of the liquid dispersion apparatus in which the liquid dispersion device shown in FIG. 1 is incorporated.

In a liquid dispersion device 300 of the present invention, the treatment chamber 110 includes, on the inner wall 111, a plurality of obstruction plates 310. The obstruction plates 310 are provided, for example, in the vicinity of the liquid surface 128 of the treatment liquid 116 that is in a static state (i.e., upper ends of the obstruction plates 310 are at substantially the same height as or slightly below the bent portion P in the liquid dispersion member 120).

The obstruction plates 310 have a function of preventing the treatment liquid 116 in the treatment chamber 110 from rotating together with the liquid flow members 120 and 120' rotated via the rotary shaft 121. In other words, the obstruction plates 310 serve as obstacles when the treatment liquid 116 rotates in the horizontal direction inside the treatment chamber 110, and thus formation of a vortex can be prevented or suppressed. Consequently, even when the liquid dispersion members 120 and 120' are rotated, the liquid surface (vortex surface) of the treatment liquid 116 is located above the bent portions P of the liquid dispersion members, and therefore, the ejection portions 123 and 123' of the liquid dispersion members 120 and 120' are likely to be filled with the treatment liquid 116, and the treatment liquid 116 is more effectively ejected from the ejection ports 125 and 125'. Eventually, a large amount of treatment liquid 116 can be ejected from the ejection ports 125 and 125', and the treatment liquid 116 in the treatment chamber 110 can be mixed and agitated more efficiently.

Although the number of obstruction plates 310 provided in the treatment chamber 110 is not necessarily limited, the liquid dispersion apparatus includes, for example, one to eight obstruction plates provided at substantially equal intervals on the inner wall 111 of the treatment chamber 110.

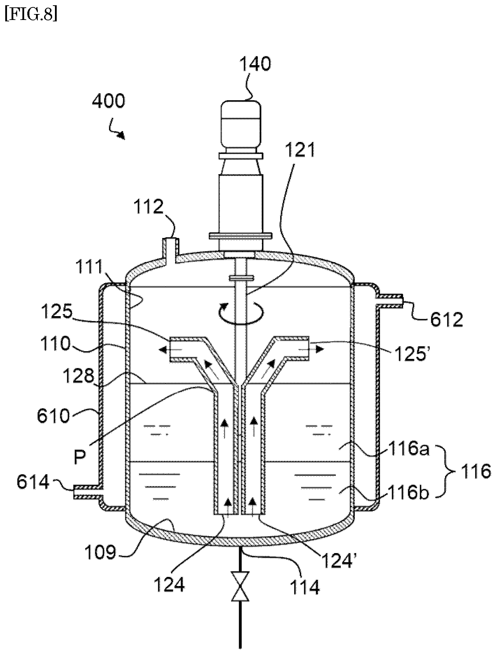

FIG. 8 is a schematic diagram showing another example of the liquid dispersion apparatus in which the liquid dispersion device shown in FIG. 1 is incorporated.

In a liquid dispersion apparatus 400 shown in FIG. 8, the treatment chamber 110 includes, around the outer circumferential surface, a jacket 610 for temperature control. The jacket 610 shown in FIG. 8 is made of, for example, a hollow material, and a thermal medium such as steam, water, or heat transfer oil can be introduced via a pipe (not shown) from a jacket inlet 612 and discharged from a jacket outlet 614. The thermal medium introduced into the jacket 610 can control the temperature of the treatment liquid 116 in the treatment chamber 110, by heating the treatment liquid 116 from outside of the treatment chamber 110.

In the embodiment shown in FIG. 8, a thermal medium for heating is used as the thermal medium to heat the inside of the treatment chamber 110, but the present invention is not limited to this example. For example, instead of the heating heat medium, a cooling heat medium such as liquefied nitrogen, water, brine, or a gas coolant (e.g., carbon dioxide or chlorofluorocarbon) may also be introduced into the jacket 610.

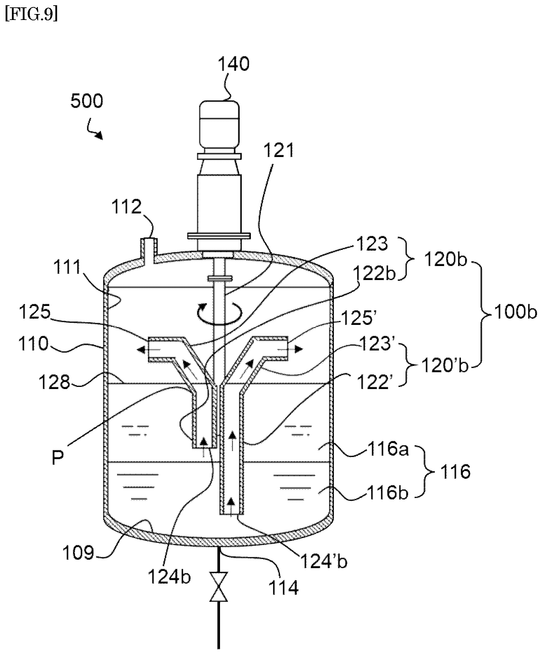

FIG. 9 is a schematic diagram showing an example of the liquid dispersion apparatus in which the liquid dispersion device shown in FIG. 4 is incorporated.

In a liquid dispersion apparatus 500 shown in FIG. 9, the suction ports 124b and 124'b of the liquid dispersion members 120b and 120'b of the liquid dispersion device 100b are located at different heights in the vertical direction.

When the oil phase 116a and the water phase 116b of the treatment liquid 116 are contained at respective positions shown in FIG. 9 (i.e., the suction port 124b of the liquid dispersion member 120b is located in the oil phase 116a and the suction port 124'b of the liquid dispersion member 120'b is located in the water phase 116b in a static state, for example) in this configuration and the rotary shaft 121 is rotated by the motor 140, a portion of the treatment liquid 116 that is mostly composed of components of the oil phase 116a or contains those components in a large amount can be sucked through the suction port 124b of the liquid dispersion member 120b, and a portion of the treatment liquid 116 that is mostly composed of components of the water phase 116b or contains those components in a large amount can be sucked through the suction port 124'b of the liquid dispersion member 120'b (although portions of the oil phase 116a and the water phase 116b may be mixed by the rotation of the liquid dispersion device 100b). The portions of the treatment liquid 116 respectively sucked through the suction ports 124b and 124'b are respectively ejected from the ejection ports 125 and 125' of the liquid dispersion members 120b and 120'b toward, for example, the liquid surface 128 and the inner wall 111 of the treatment chamber 110.

Here, the treatment liquid 116 ejected in a turn of the liquid dispersion members 120b and 120'b and colliding with the inner wall 111 flows down along the inner wall 111 while forming a thin film. Thereafter, the treatment liquid 116 ejected in another turn of the liquid dispersion members 120b and 120'b and colliding with the inner wall 111 also flows down along the inner wall 111 while forming a thin film. Accordingly, when the liquid dispersion members 120b and 120'b are kept rotated, portions of the treatment liquid 116 respectively sucked via the suction ports 124b and 124'b having different compositions flow down along the inner wall 111 while forming multiple layers of thin films on the inner wall 111.

Consequently, the components of the oil phase 116a and the components of the water phase 116b of the treatment liquid 116 can be effectively mixed or agitated in the treatment chamber 110.

In particular, after the insides of the liquid dispersion members 120b and 120'b (i.e., the insides of the suction portions 122b and 122' and the ejection portions 123 and 123') are entirely filled with the treatment liquid 116 by rotating the rotary shaft 121, the above-mentioned "siphon-like" movement of the treatment liquid occurs, and thus it is possible to continuously circulate the treatment liquid 116 in the treatment chamber 110 with little power.

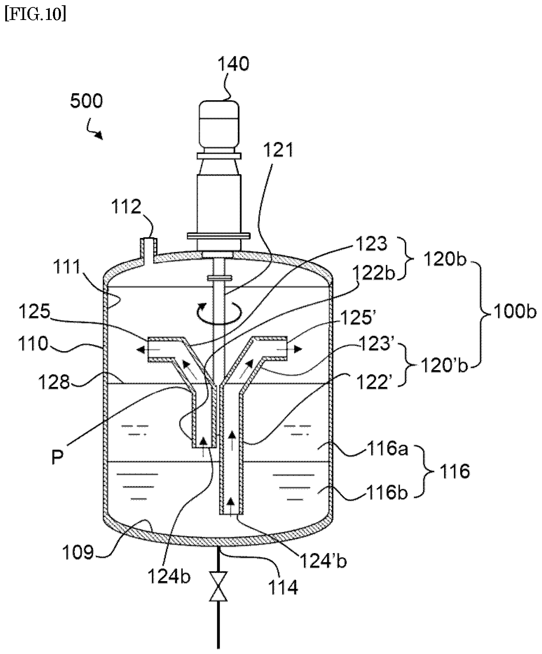

FIG. 10 is a schematic diagram showing an example of the liquid dispersion apparatus (reaction apparatus) in which the liquid dispersion device shown in FIG. 5 is incorporated.

In a liquid dispersion apparatus 600 shown in FIG. 10, the suction port 124c of the liquid dispersion member 120c of the liquid dispersion device 100c faces the bottom 109 of the agitating chamber 110.

When the rotary shaft 121 is rotated by the motor 140 in this configuration, the oil phase 116a and the water phase 116b are sucked through the suction port 124c of the liquid dispersion member 120c while being mixed with each other by the rotation of the liquid dispersion device 100c. The treatment liquid 116 sucked through the suction port 124c flows through the suction portion 122c, is divided above the suction portion 122c, flows into one ejection portion and the other ejection portion, namely the ejection portions 123c and 123'c, and is finally ejected from the ejection ports 125c and the 125'c of the liquid dispersion member 120c toward, for example, the liquid surface 128 and the inner wall 111 of the treatment chamber 110.

Consequently, the components of the oil phase 116a and the components of the water phase 116b of the treatment liquid 116 can be effectively mixed or agitated in the treatment chamber 110.

In particular, after the inside of the liquid dispersion member 120c (i.e., the insides of the suction portion 122c and the ejection portions 123c and 123'c) is entirely filled with the treatment liquid 116 by rotating the rotary shaft 121, the above-mentioned "siphon-like" movement of the treatment liquid occurs, and thus it is possible to continuously circulate the treatment liquid 116 in the treatment chamber 110 with little power.

In a case where the liquid dispersion apparatus of the present invention is used as, for example, a reaction apparatus, the apparatus is useful in the production of various reaction products in which agitation of a reaction liquid (reactants) is desired. In particular, in a two-phase system (heterogeneous reaction system) such as those constituted by an oil phase and a water phase and a reaction system constituted by multiple phases (e.g., two phases) of chemical substances, it is possible to obtain a reaction product more effectively with use of the liquid dispersion apparatus, when compared with a case where a conventional agitator is used. An example of a reaction carried out using a two-phase system is a transesterification reaction for producing a fatty acid ester.

In the present invention, the suction portion of each liquid dispersion member of the liquid dispersion device extends in the vertical direction, and can be rotated with a relatively small radius of rotation via the rotary shaft, to which the suction portion is attached. On the other hand, the ejection portion is inclined at a predetermined angle, and therefore, the treatment liquid can be easily discharged to the outside through the path inside the ejection portion by centrifugal force caused by the rotation. Consequently, the liquid dispersion device according to the present invention can be rotated with less energy in the treatment liquid, and it is possible to efficiently discharge the treatment liquid, i.e., perform various operations such as agitation, a reaction, extraction, evaporation, and the like of the treatment liquid.

Furthermore, with the present invention, the liquid dispersion device has a structure that is suitable for induction of the above-mentioned "siphon-like" movement of the treatment liquid, and therefore, once the siphon-like movement of the treatment liquid starts in the liquid dispersion device in which the liquid dispersion device is used, the suction of the treatment liquid and the ejection of the treatment liquid from the ejection part can be substantially continuously performed using the liquid dispersion device even if the rotary shaft 121 is rotated at a relatively reduced speed (i.e., even if the power required for rotation is reduced).

### Method for Producing Reaction Product

Next, the following describes a method for producing a predetermined reaction product with use of a liquid dispersion apparatus in which the liquid dispersion device of the present invention is incorporated.

In the production method of the present invention, agitation is performed through circulation of a treatment liquid in the liquid dispersion apparatus in which the liquid dispersion device is incorporated. Here, the term "agitation through circulation" as used herein refers to both agitation performed by applying horizontal rotation to a target liquid (e.g., a reaction liquid) and stirring (or mixing) of the entire liquid through vertical movement and circulation of the liquid, as in the case of using the above-described liquid dispersion apparatus.

The treatment liquid for use in the present invention contains an inorganic or organic liquid medium, and its chemical reaction can be commonly progressed and controlled through agitation with use of an agitator or the like. For example, the treatment liquid is a heterogeneous reaction liquid. For example, a reaction liquid constituted by an oil phase and a water phase is useful in that the emulsification of the reaction liquid can be improved and facilitated by the above-mentioned agitation through circulation.

In the case where the treatment liquid is a heterogeneous reaction liquid, the treatment liquid contains, for example, a raw material oil or fat, a liquid enzyme, an alcohol having 1 to 8 carbon atoms, and water.

The raw material oil or fat is, for example, an oil or fat that can be used to produce a fatty acid ester for biodiesel fuel. The raw material oil or fat may be a preliminarily refined oil or fat or may be an unrefined oil or fat containing impurities. Examples of the raw material oil or fat include cooking oils and fats, waste cooking oils and fats, crude oils, and other waste matter-based oils and fats, as well as combinations thereof. Examples of the cooking oils and fats and waste cooking oils and fats include vegetable oils and fats, animal oils and fats, fish oils, oils and fats produced by microorganisms, and waste oils thereof, as well as mixtures (mixed oils and fats) thereof. Examples of the vegetable oils and fats include soybean oil, rapeseed oil, palm oil, and olive oil, but are not necessarily limited thereto. Examples of the animal oils and fats include beef tallow, lard, chicken fat, whale oil, and mutton tallow, but are not necessarily limited thereto. Examples of the fish oils include sardine oil, tuna oil, and squid oil, but are not necessarily limited thereto. Examples of the oils and fats produced by microorganisms include oils and fats produced by microorganisms belonging to the genus *Mortierella,* the genus *Schizochytrium,* or the like, but are not necessarily limited thereto.

Examples of the crude oils include unrefined or unprocessed oils and fats that are obtained from a conventional oil expression step for cooking oils and fats, and the crude oils may contain, for example, gum-like impurities, such as phospholipids and/or proteins, free fatty acids, pigments, trace metals, and other hydrocarbon impurities that are soluble in oil, as well as combinations thereof. The amount of impurities contained in a crude oil is not particularly limited.

Examples of the waste matter-based oils and fats include oil foots obtained as a result of refining, in the presence of an alkali, raw oil that is produced during the production of a food oil or fat, heat-treated oil, press oil, and rolling oil, as well as combinations thereof.

The raw material oil or fat may contain water in any amount, as long as the water does not inhibit the inherent characteristics of the oil or fat. Furthermore, an unreacted oil or fat remaining in a solution that has been used in a separate reaction for forming a fatty acid ester may also be used as the raw material oil or fat.

With regard to the liquid enzyme, enzyme catalysts that have the properties of liquid at room temperature, of any enzyme catalysts that can be used for a fatty acid ester generating reaction can be used. Examples of the liquid enzyme include lipase, cutinase, and combinations thereof. Here, the term "lipase" as used herein refers to an enzyme that has the ability to act on a glyceride (also called acylglycerol) and degrade the glyceride into glycerin or a partial glyceride and a fatty acid, and also has the ability to generate a fatty acid ester via transesterification in the presence of a linear lower alcohol.

The lipase may be 1,3- specific or may be nonspecific. In terms of the capability of producing a linear lower alcohol ester of a fatty acid, it is preferable that the lipase is nonspecific. Examples of the lipase include lipases derived from filamentous fungi belonging to the genus *Rhizomucor (Rhizomucor miehei),* the genus *Mucor,* the genus *Aspergillus,* the genus *Rhizopus,* the genus *Perzicillium,* and the like; lipases derived from yeasts belonging to the genus *Candida (Candida antarcitica, Candida rugosa, and Candida cylindracea), Pichia,* and the like; lipases derived from bacteria belonging to the genus *Pseudomonas,* the genus *Serratia,* and the like; and lipases derived from animals, such as pig pancreas. Liquid lipase can be obtained by, for example, concentrating and refining a culture solution of any of the above-described microorganisms containing lipase produced by that microorganism or by dissolving powdered lipase in water. A commercially available liquid lipase can also be used.

The amount of the above-described liquid enzyme used in the present invention varies according to, for example, the type and/or amount of raw material fat or oil, and is therefore not necessarily limited, but is preferably 0.1 to 50 parts by mass, and more preferably 0.2 to 30 parts by mass, with respect to 100 parts by mass of raw material fat or oil that is used. If the amount of liquid enzyme that is used is less than 0.1 parts by mass, an effective transesterification reaction cannot be catalyzed, and there is thus a risk that the yield and/or the percentage yield of a desired fatty acid ester may be reduced. If the amount of liquid enzyme that is used exceeds 50 parts by mass, the yield and/or the percentage yield of the desired fatty acid ester that is obtained through the transesterification reaction no longer changes, but rather there is a risk that the production efficiency may be reduced.

The alcohol is a linear or branched lower alcohol (e.g., an alcohol having 1 to 8 carbon atoms, and preferably an alcohol having 1 to 4 carbon atoms). A linear lower alcohol is preferable. Examples of the linear lower alcohol include, but are not necessarily limited to, methanol, ethanol, n-propanol, and n-butanol, as well as combinations thereof.

The amount of the above-described alcohol that is used varies according to, for example, the type and/or amount of raw material oil or fat that is used and is therefore not necessarily limited, but is preferably 5 to 100 parts by mass, and preferably 10 to 30 parts by mass, with respect to 100 parts by mass of raw material oil or fat. If the amount of alcohol that is used is less than 5 parts by mass, an effective transesterification reaction cannot be performed, and there is thus a risk that the yield and/or the percentage yield of a desired fatty acid ester may be reduced. If the amount of alcohol that is used exceeds 100 parts by mass, the yield and/or the percentage yield of the desired fatty acid ester that is obtained through the transesterification reaction no longer changes, but rather there is a risk that the production efficiency may be reduced.

Water that is used in the present invention may be any of distilled water, ion-exchanged water, tap water, and pure water. The amount of the above-described water that is used varies according to, for example, the type and/or amount of raw material oil or fat that is used and is therefore not necessarily limited, but may be preferably 0.1 to 50 parts by mass, and preferably 2 to 30 parts by mass, with respect to 100 parts by mass of raw material oil or fat. If the amount of water that is used is less than 0.1 parts by mass, the amount of the water layer formed in the reaction system is insufficient, making it impossible for an effective transesterification reaction using the above-described raw material oil or fat, liquid enzyme, and alcohol to occur, and thus there is a risk that the yield and/or the percentage yield of a desired fatty acid ester may be reduced. If the amount of water that is used exceeds 50 parts by mass, the yield and/or the percentage yield of the desired fatty acid ester that is obtained through the transesterification reaction no longer changes, but rather there is a risk that the production efficiency may be reduced.

In the method of the present invention, a predetermined electrolyte may be added to the above-described treatment liquid. Examples of anions included in the electrolyte include hydrogen carbonate ions, carbonate ions, chloride ions, hydroxide ions, citrate ions, hydrogen phosphate ions, dihydrogen phosphate ions, and phosphate ions, as well as combinations thereof, but are not necessarily limited thereto. Examples of cations included in the electrolyte include alkali metal ions and alkaline earth metal ions, as well as combinations thereof, and more specifically include sodium ions, potassium ions, and calcium ions, as well as combinations thereof. Preferred examples of the electrolyte include sodium hydrogen carbonate (baking soda), sodium carbonate, calcium chloride, calcium hydroxide, trisodium citrate, sodium hydrogen phosphate, sodium dihydrogen phosphate, sodium chloride, and trisodium phosphate, as well as combinations thereof. Sodium hydrogen carbonate (baking soda) is more preferable because it is versatile and easily available, for example.

The above-described raw material fat or oil, catalyst, alcohol, and water are placed into, for example, the treatment chamber 110 of the liquid dispersion apparatus 200 shown in FIG. 6 through the treatment liquid inlet 112 simultaneously or in any order to form a treatment liquid 116 constituted by the oil phase 116a and the water phase 116b. Subsequently, when the liquid flow members 120 and 120' of the liquid dispersion device 100 are rotated inside the treatment chamber 110 by the rotation of the rotary shaft 121, the treatment liquid 116 is sucked to the liquid flow members 120 and 120', and the sucked treatment liquid moves upward through the paths inside the suction portions 122 and 122' and the ejection portions 123 and 123' and is then ejected from the ejection ports 125 and 125' of the liquid flow members 120 and 120' as described above. This movement of the treatment liquid 116 facilitates agitation of the treatment liquid 116 and the formation of a fatty acid ester that is a reaction product. The temperature in the treatment chamber 110 is not necessarily limited, but is, for example, 5°C to 80°C, preferably 15°C to 80°C, and more preferably 25°C to 50°C.

Note that the rotary shaft does not necessarily need to be rotated at a high speed (e.g., 600 rpm or higher) in the liquid dispersion apparatus 200. For example, the rotary shaft may be rotated at a low speed (e.g., 80 rpm or higher and lower than 300 rpm) or at a medium speed (e.g., 300 rpm or higher and lower than 600 rpm). Furthermore, the reaction time varies according to the amounts of a raw material oil or fat, a catalyst, an alcohol, and water that are used and is therefore not necessarily limited, and a person skilled in the art can set any desired period of time. In particular, as described above, once the "siphon-like" movement of the treatment liquid occurs in the liquid dispersion devices 120 and 120' in the liquid dispersion apparatus 200, the "siphon-like" movement of the treatment liquid is maintained by hysteresis even if the rotation of the rotary shaft is reduced. As a result, the power required for the rotation of the rotary shaft can be reduced. However, if the rotational frequency is reduced compared with that at the time of start of the siphon-like movement of the treatment liquid, the power cannot be reduced compared with a case where the siphon-like movement of the treatment liquid does not occur. This is because the power also exhibits hysteresis.

Another feature is that, once the siphon-like movement of the treatment liquid is disclosed, gushing of the treatment liquid continues even if the liquid surface lowers, thus making it possible to continue the reaction. The effects of this feature can be exhibited when, for example, a liquid that has gathered on the bottom of the treatment chamber 110 is removed while the reaction is continued (e.g., when it is desired that an aqueous solution of glycerin, which is a reaction product but serves as a reaction inhibitor, is removed from the treatment chamber 110 while the reaction is continued).

Furthermore, a plurality of liquid dispersion devices (e.g., liquid dispersion devices 120 and 120') are placed in the liquid dispersion apparatus 200, and therefore, once the above-mentioned siphon-like movement of the treatment liquid starts in each of the liquid dispersion devices, the amount of treatment liquid that is circulated can be further increased by increasing the rotational frequency of the rotary shaft 121. As a result, for example, the reaction in the liquid dispersion apparatus 200 can be accelerated. Meanwhile, with this liquid dispersion apparatus 200 that includes the plurality of liquid dispersion devices, the treatment liquid in the treatment chamber 110 can be more gently circulated by reducing the rotational frequency of the rotary shaft 121 after the above-mentioned siphon-like movement of the treatment liquid starts. This is useful when, for example, fragile solids or bacterial are circulated in the treatment chamber 110.

After the completion of the reaction, the product and reaction residues are taken out of the treatment chamber 110 of the liquid dispersion apparatus 200, and separated into a layer containing the fatty acid ester and a layer containing the by-product glycerin by using, for example, a method that is well-known to a person skilled in the art. After that, the layer containing the fatty acid ester may be further subjected to isolation and refining of the fatty acid ester by using a method that is well-known to a person skilled in the art, as necessary.

The fatty acid ester that is obtained in the above-described manner can be used as, for example, biodiesel fuel or a constituent component thereof.

### List of Reference Numerals

100, 100a, 100b, 100c Liquid dispersion device
109 Bottom
110 Treatment chamber
111 Inner wall
112 Treatment liquid inlet
114 Outlet for a product etc.
115 Valve
116 Treatment liquid
116a Oil phase
116b Water phase
120, 120', 120a₁, 120a₂, 120b, 120'b, 120c Liquid flow member
121 Rotary shaft
122, 122a₁, 122a₂, 122', 122b, 122c Suction portion
123, 123', 123a₁, 123a₂, 123b, 123c, 123'c Ejection portion
124, 124a₁, 124a₂, 124', 124b, 124c Suction port
125, 125', 125a₁, 125a₂, 125b, 125c, 125'c Ejection port
126, 126a₁, 126a₂ Opening surface
128 Liquid surface
140 Motor
200, 300, 400, 500, 600 Liquid dispersion apparatus
310 Obstruction plate
610 Jacket
612 Jacket inlet
614 Jacket outlet
Aₓ Axis
Tₛ Axial direction
H Horizontal direction

## Claims

1. A liquid dispersion device comprising
at least one liquid flow member attachable to a rotary shaft,
wherein the liquid flow member includes:
at least one tubular suction portion extending along the rotary shaft and including a suction port at a lower end thereof and
at least one tubular ejection portion extending in a direction inclined with respect to the suction portion and having one end that is in communication with an upper end of the suction portion and the other end that includes an ejection port, and
an angle θ₂ formed between a horizontal direction and an axial direction of the ejection portion at an opening surface of the ejection port satisfies a relationship -90°≤θ₂≤20° with respect to the horizontal direction.

2. The liquid dispersion device according to claim 1, wherein the suction portion of the liquid flow member extends in parallel with the rotary shaft.

3. The liquid dispersion device according to claim 1 or 2, wherein the suction portion of the liquid flow member is a straight tube extending substantially in parallel with an axial direction of the rotary shaft.

4. The liquid dispersion device according to any one of claims 1 to 3, comprising a plurality of the suction portions, wherein the lower ends of all of the suction portions are located at the same height with respect to the rotary shaft.

5. The liquid dispersion device according to any one of claims 1 to 3, comprising a plurality of the suction portions, wherein the lower end of one of the suction portions and the lower end of another suction portion of the suction portions are located at different heights with respect to the rotary shaft.

6. Aliquid dispersion apparatus comprising:
a treatment chamber for containing a treatment liquid;
the liquid dispersion device according to any one of claims 1 to 5 provided in the treatment chamber; and
a rotary shaft to which the liquid dispersion device is attached.

7. A method of circulating a treatment liquid, comprising:
rotating the liquid dispersion device according to any one of claims 1 to 5 to draw the treatment liquid into the liquid dispersion device and eject the treatment liquid from the liquid dispersion device,
wherein the step in which the treatment liquid is drawn into the liquid dispersion device and ejected from the liquid dispersion device is performed in a state in which insides of tubular portions of both the suction portion and the ejection portion of the liquid dispersion device are filled the treatment liquid.
